# EUROPEAN PATENT APPLICATION

(11) **EP 1 716 760 A2**
(43) Date of publication of application: **02.11.2006**
(21) Application number: 06112260.2
(22) Date of filing: 05.04.2006
(51) Int. Cl.: A23G 9/28, A23G 9/30, A23G 9/04

(54) **Machine and method for producing and dispensing liquid or semi-liquid consumer food products**

(30) Priority: 29.04.2005 IT BO20050299
(71) Applicant: Ali SpA, 20123 Milano (IT)
(72) Inventor: Cocchi, Gino, 40137 Bologna (IT); Zaniboni, Gianni, 40037 Borgonuovo di Sasso Marconi (IT)
(74) Representative: Ghioni, Carlo Raoul Maria

(57) **Abstract**

A machine for producing and dispensing liquid and semi-liquid consumer food products such as ice cream, whipped cream, yoghurt and the like, comprises a container (3) for a basic product of the consumer food product, a feed and treatment circuit (4) for the basic product comprising a feed pump (8), dispensing means (11) positioned at an outfeed end of the feed and treatment circuit (4), and a washing device (18) used to introduce, in alternate steps, into the circuit (4) a flow of fluid in the liquid state or in the steam state to allow feed and treatment circuit (4) washing and sanitising. There is a central processing unit (32) which controls and regulates the various washing and sanitising steps.

## Description

The present invention relates to a machine for producing and dispensing liquid and semi-liquid consumer food products.

The present invention relates in particular, although without limiting the scope of the inventive concept, to machines for producing and dispensing crushed-ice drinks, sorbets, ice creams, soft ice creams, cream, yoghurt and the like and to machines for producing and preserving mixtures for ice cream, creams, sauces, soups and mixtures in general and the like.

As is known, machines of the above-mentioned type comprise a container for the basic product, consisting for example of liquid cream, mixtures of products for ice cream, syrups and the like, and a feed circuit along which there are devices, including refrigerating means, for the treatment and processing of the basic product and at the outfeed end of which there are dispensing devices, consisting of nozzles or taps designed to allow collection of the finished product (whipped cream, ice cream, crushed-ice drink, etc.).

Partly because the products they treat are highly perishable, such machines are subject to frequent checks and maintenance work to guarantee that perfect hygienic conditions are maintained along the entire feed circuit.

The parts of the feed circuit close to or in contact with the outside environment are particularly critical, for example the dispensing devices, the taps, the nozzles.

Such work, which may necessitate the disassembly of component parts of the circuit, involves washing and sanitising operations, that is to say, sterilising with liquids consisting of special bactericidal substances.

Said operations are particularly laborious when the parts treated are not easily accessible and have a complex structure, for example the emulsifying homogeniser core in cream whipping machines.

The aim of the present invention is therefore to provide a machine for producing and dispensing liquid and semi-liquid consumer food products which is able to overcome the above-mentioned disadvantages. In accordance with the invention this aim is achieved by a machine and a method for producing and dispensing liquid and semi-liquid consumer food products with the characteristics described in one or more of the claims herein.

The technical characteristics of the invention, with reference to the above aims, are clearly described in the claims below and its advantages are more apparent from the detailed description which follows, with reference to the accompanying drawings which illustrate a preferred embodiment of the invention provided merely by way of example without restricting the scope of the inventive concept, and in which:
- Figures 1 and 2 are schematic block diagrams of two embodiments, in accordance with the present invention, of a machine for producing and dispensing liquid and semi-liquid consumer food products;
- Figures 3 and 4 are perspective schematic views, with some parts cut away and others exploded, of two machines made in accordance with the present invention;
- Figure 5 is an enlarged schematic section of a detail from Figure 3;
- Figure 6 is a perspective schematic view with some parts cut away and others drawn in dashed line style, of another machine made in accordance with the present invention;
- Figure 7 is a schematic side view with some parts cut away and others shown with hatching, of another type of machine made in accordance with the present invention.

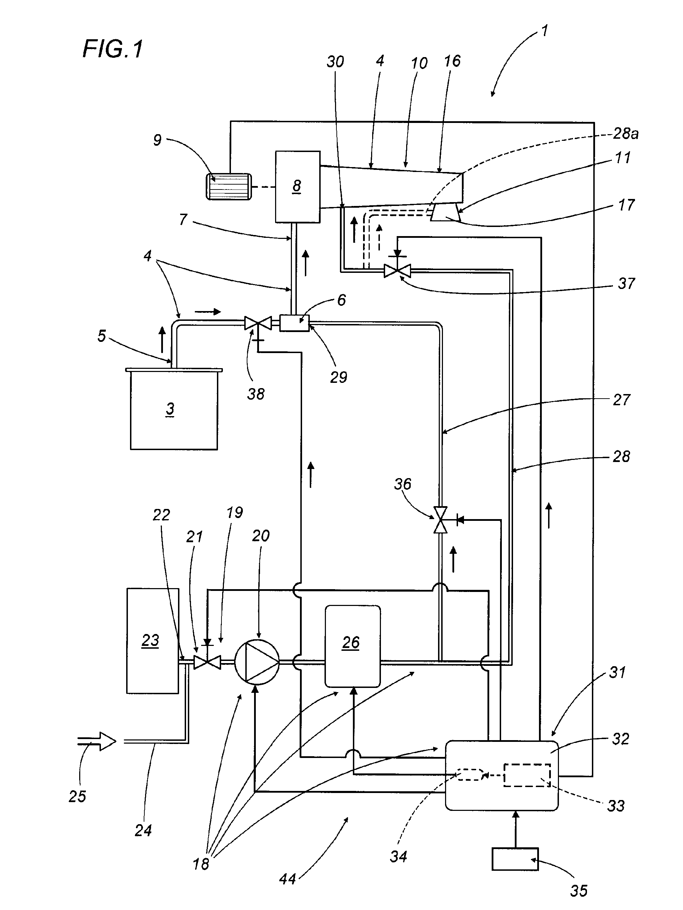

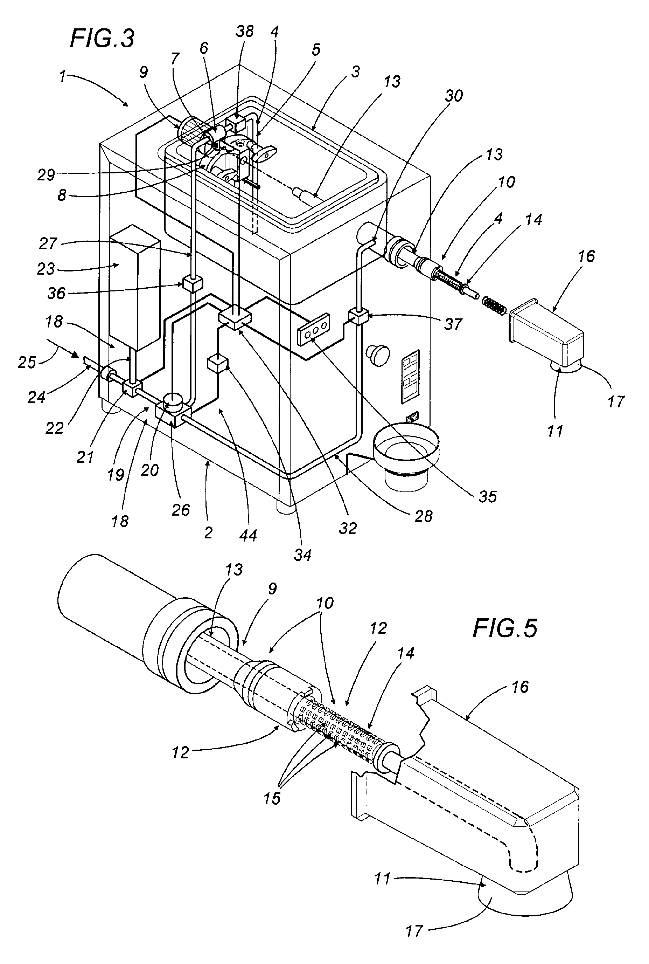

With reference to Figure 1, the numeral 1 denotes as a whole a machine for producing and dispensing liquid or semi-liquid consumer food products and in particular a cream whipping machine. The machine 1, as also shown in Figure 3, has a base 2 which substantially has the shape of a parallelepiped which houses a tank 3, for holding a basic product of the consumer food product, which in the case considered is liquid cream.

The numeral 4 denotes as a whole a cream feed and treatment circuit. The circuit 4 comprises a first pipe 5 connecting the tank 3 to a quick coupling and release joint 6, a second pipe 7 connecting the joint 6 and a pump 8, having a motor 9, for feeding the basic product to treatment means, labelled 10 as a whole and fitted at their outfeed end with dispensing means 11.

As illustrated in detail in Figure 5, the treatment means 10 comprise an emulsifying homogeniser core 12 consisting of a tubular element 13 with a substantially horizontal axis, in which a cylindrical body 14 is inserted coaxially to it, the cylindrical body having a plurality of projections 15 on its outer surface, known to experts in the trade as a *"Labyrinth".*

Thus, between the inner surface of the tubular element 13 and the cylindrical body 14 a passage is formed for the liquid cream fed by the pump 8. The projections 15 are preferably positioned in such a way that along the passage they form winding paths which have the effect of increasing the collisions of the fat particles in the liquid cream, resulting in the absorption of air which whips the cream.

An end section of the tubular element 13 is positioned inside a box-shaped body 16 fixed to the outside of the base 2. Said box-shaped body supports below it and at its free end the dispensing means 11 consisting of a nozzle 17 connected to the free end of the tubular element 13.

A device for washing the feed and treatment circuit 4 is part of the machine 1. Said device, labelled 18 as a whole, comprises means for introducing a washing fluid into the circuit 4. The fluid introduction means comprise means 19 for connection to a washing fluid source and consist of pump means 20 connected at infeed, by valve means 21, to a feed pipe 22 for the washing fluid contained in a tank 23 and consisting of water and/or a sanitising liquid. Alternatively, there may be a pipe 24 connecting the valve means 21 and the water mains schematically indicated with the arrow 25. The fluid introduction means also comprise heating or boiler means 26 for the water and/or sanitising liquid, and a first and a second pipe 27, 28 connecting the heating means 26 respectively with a first outlet point 29 at the joint 6 and a second outlet point 30 at a tubular element 13 infeed.

The washing device 18 has control means 31 comprising a central processing unit 32 including timing means 33 and temperature regulating means 34 for the heating means 26.

The central processing unit 32 is controlled from a keyboard 35 which the operator uses to enter data, and is connected at output to the valve means 21, the pump means 20, the heating means 26 a valve 36 located along the first pipe 27, a valve 37 located along the second pipe 28, and another valve 38 located along the pipe 5, and finally to the motor 9.

In practice, during a normal machine 1 production cycle, the washing device 18 is switched off whilst the pump 8 by means of the pipes 5 and 7, through the open valve 38 and the joint 9 sucks the liquid cream from the tank 3 and pushes it along the treatment means 10. As it travels through the passage formed between the inner surface of the tubular element 13 and the cylindrical body 14 the liquid cream is transformed into whipped cream and reaches the dispensing nozzle 17.

When the washing device 18 is off, the valve 36 and 37 are closed, the pump means 20 are switched off and the heating means 26 controlled by the temperature regulating means 34 keep the washing fluid at a particular and predetermined temperature set in advance from the keyboard 35.

Whenever a machine 1 washing operation is necessary, in conditions in which the production cycle has stopped and therefore with the valve 38 closed by a command issued by the unit 32, the washing device 18 operates as follows.

The central processing unit 32 issues a command to open the solenoid valve 21 and the two solenoid valves 36 and 37, the pump 20 is activated and the washing fluid is heated to a particular washing temperature and fed in the liquid state, through the two pipes 27 and 28, to the outlet points 29 and 30 so as to perform a first wash of the joint 6, the pipe 7, the pump 8 and the treatment means 10 and the dispensing nozzle 11.

At the end of this first washing step, the timing means 33 issue a command to the temperature regulating means 34 which increase the temperature of the heating means 26 to a level which turns the washing fluid into steam, so that a second washing step can be performed. Said steps can be repeated one after another and alternately any number of times.

It should be noticed that there may be a pipe branching off from the pipe 28 and labelled 28a which leads directly into the dispensing nozzle 17 so that the nozzle 17 can be washed more thoroughly. If only the nozzle 17 is to be washed, there must be another valve (not illustrated) upstream of the outlet 30.

Finally, the pump 8 can be washed while it is running or stopped.

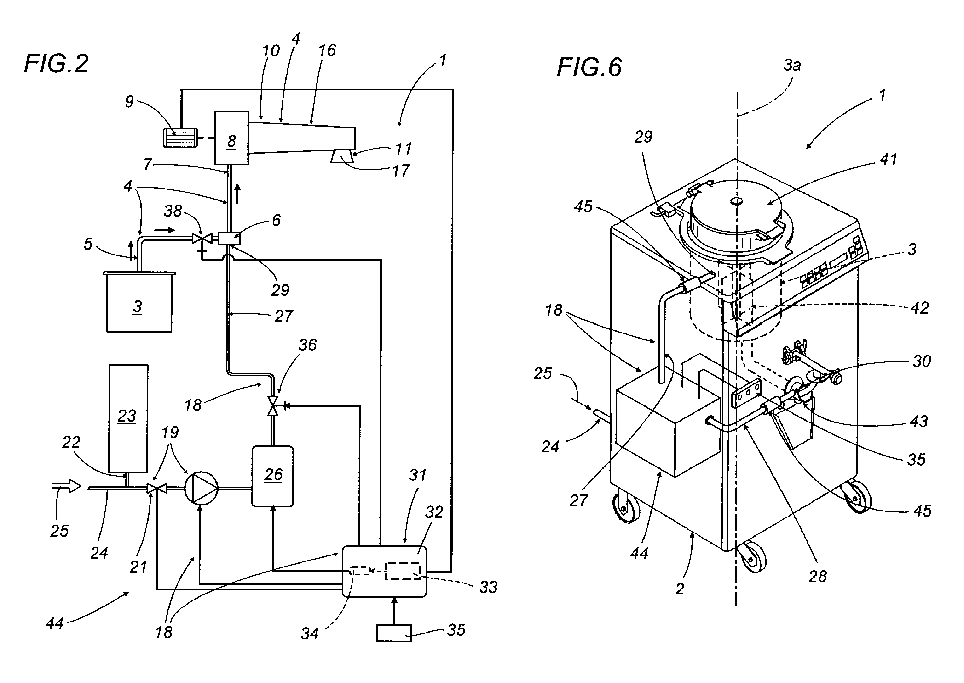

Figure 2 differs from Figure 1 only in the fact that it illustrates only the washing fluid feed pipe 27 at the outlet 29 at the joint 6.

Figure 4 shows a machine 1 for producing ice cream, which differs from the machine 1 illustrated in Figure 3 in that the product treatment means, labelled 39, consist of a "freezing" (or liquid-to-solid stirring, cooling, air addition) unit consisting of a freezing cylinder connected to a refrigerating unit and having a stirrer inside, of the known type and not illustrated. In the front part of the cylinder there is a tap 40 for dispensing the ice cream.

The two pipes 27 and 28 have the respective outlet points 29 and 30 at the joint 6 and immediately upstream of the dispensing means 11 consisting of the tap 40. The washing steps are carried out using the same methods described for the machine illustrated in Figure 3.

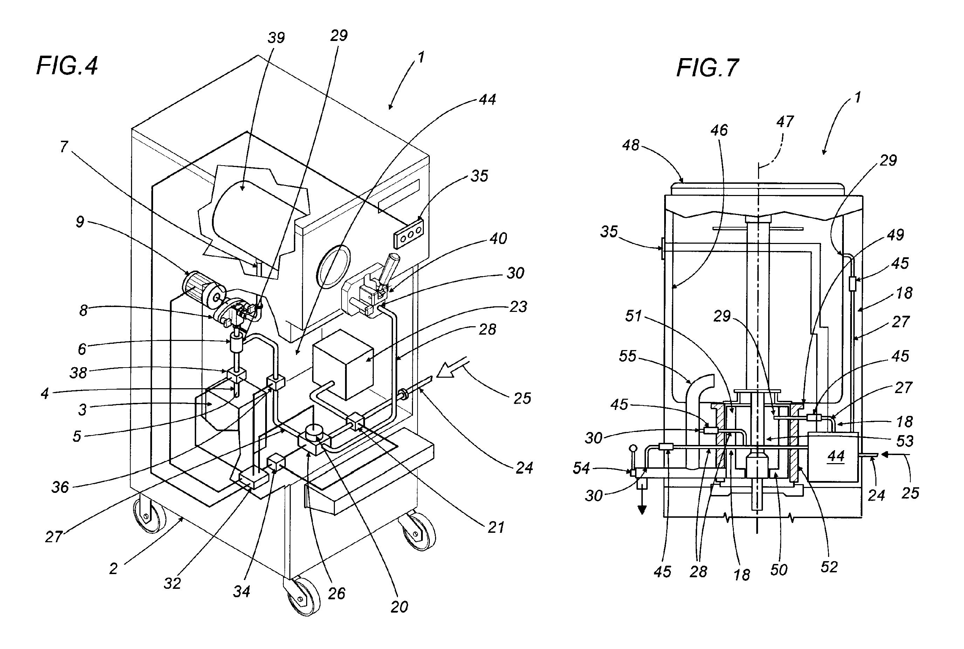

Figure 6 shows a machine 1 for producing, pasteurising and preserving creams for fillings and coatings, colour mixture for chocolate, fruit jams, mixtures in general, mixtures for ice creams, sauces and similar products.

In this case, the feed and treatment circuit 4 consists of a tank 3, having a vertical axis 3a, closed by a lid 41 and housing a stirrer 42, designed to stir the product. On the front of the machine 1 there is a tap 43 for dispensing the product from the tank 3. The tank 3 is equipped with an indirect heating device, of the known type and not illustrated, able to generate high cooking temperatures, as well as a refrigerating system, also not illustrated, which allows the product processed to be preserved in the machine at the end of the production cycle.

In an identical way to that described for the machines illustrated in Figures 3 and 4, the washing device 18 has the outlet point 29 of the first washing fluid feed pipe 27 in the tank 3, whilst the outlet point 30 of the second washing fluid connecting pipe 28 is at the product dispensing tap 43.

For this type of machine 1 too, the washing steps are performed with the same methods described for the machines illustrated in Figures 3 and 4.

It should also be noticed that the washing device 18 may consist of a kit 44 which can be connected to the machine 1 using quick coupling - release means, which in the case in Figure 6, by way of example only, are labelled 45.

The kit 44 may be produced and sold separately to the machine 1 and may even be retrofitted on existing machines.

Finally, Figure 7 illustrates another machine 1 for producing and pasteurising mixtures for ice cream and similar products.

In this case, the feed and treatment circuit 4 consists of a tank 46, having a vertical axis 47 and closed at the top by a transparent lid 48.

At its base 49 the tank 46 has a cup pump, labelled 50 as a whole, housed inside a substantially cylindrical compartment 51 around which there is a hot - cold heat exchange circuit 52, of the known type and schematically illustrated with hatching. The pump 50 has a stirrer with vanes 53, designed to stir the product. On the front of the machine 1 there is a tap 54 for dispensing the product from the tank 46.

In an identical way to that described for the machines illustrated in Figures 3, 4 and 6, the washing device 18 has the outlet point 29 of the first washing fluid feed pipe 27 in the tank 46, whilst the outlet point 30 of the second washing fluid connecting pipe 28 is at the product dispensing tap 54.

There is also another outlet 29 in the cup pump 50 compartment 51 and another outlet 30 in a siphon 55 which draws the product from the tank 46 and conveys it to the tap 54.

For this type of machine 1 too, the washing steps are performed with the same methods described for the machine illustrated in Figure 3 and for those illustrated in Figures 4 and 6.

The invention described is suitable for obvious industrial applications and can be modified and adapted without thereby departing from the scope of the inventive concept. Moreover, all technical details of the invention may be substituted by technically equivalent elements.

In particular it should be noticed that, for example, the washing device 18 can use as a washing and sanitising fluid not just liquids at a high temperature or in the steam state, but also gases, in particular sterilising gases such as carbon dioxide and oxygen. In this case, the gases of this type are accumulated in respective cylinders connected to the washing and sanitising device 18.

## Claims

1. A machine for producing and dispensing liquid and semi-liquid consumer food products, comprising a container or tank (3) for a basic product of the consumer food product, a feed and treatment circuit (4) for the basic product, dispensing means (11) positioned at an outfeed end of the feed and treatment circuit (4), the machine being **characterised in that** it comprises a device (18) for washing the feed and treatment circuit (4).

2. The machine according to claim 1, **characterised in that** the washing device (18) comprises means for introducing a washing fluid into the feed and treatment circuit (4).

3. The machine according to claim 2, **characterised in that** the washing device (18) comprises control means (31) for the means for introducing a washing fluid.

4. The machine according to any of the foregoing claims from 1 to 3, **characterised in that** the means for introducing a washing fluid comprise means (19) for connection to a source of the washing fluid, the fluid consisting of water and/or a sanitising fluid.

5. The machine according to any of the foregoing claims from 1 to 3, **characterised in that** the sanitising fluid is a gas.

6. The machine according to claim 4, **characterised in that** the means (19) for connection to the source comprise pump means (20).

7. The machine according to claim 4, **characterised in that** the means for introducing a washing fluid comprise means (26) for heating the washing water and/or sanitising liquid.

8. The machine according to claim 7, **characterised in that** the heating means (26) form steam generating means.

9. The machine according to any of the foregoing claims from 2 to 8, **characterised in that** the means for introducing a washing fluid comprise at least one pipe (27; 28) connecting the heating means (26) and the feed and treatment circuit (4), for feeding the washing fluid.

10. The machine according to claim 9, **characterised in that** the means for introducing a washing fluid comprise a first and a second pipe (27, 28) connecting the heating means (26) and the feed and treatment circuit (4), for feeding washing fluid to respective outlet points (29, 30) along the feed and treatment circuit (4).

11. The machine according to any of the foregoing claims from 3 to 10, **characterised in that** the control means (31) comprise a central processing unit (32) comprising timing means (33) and means (34) for regulating the temperature of the heating means (26).

12. The machine according to claim 11, **characterised in that** the means for introducing a washing fluid into the feed and treatment circuit (4) are controlled by the central processing unit (32) through the timing means (33).

13. The machine according to any of the foregoing claims from 3 to 12, **characterised in that** the central processing unit (32) is connected at output to the pump means (20) for feeding the washing fluid; pump (8) motor means (9) for feeding the basic product being controlled by the central processing unit (32).

14. The machine according to any of the foregoing claims from 11 to 13, **characterised in that** the temperature regulating means (34) are controlled by the timing means (33) in such a way that the heating means (26) adopt different temperature levels to feed alternately, according to predetermined times, the washing fluid in the liquid state or in the steam state to the feed and treatment circuit (4).

15. The machine according to any of the foregoing claims from 10 to 14, **characterised in that** the outlet point (29) of the first washing fluid feed pipe (27) is positioned upstream of a product feed pump (8) forming part of the feed and treatment circuit (4).

16. The machine according to any of the foregoing claims from 10 to 14, **characterised in that** the outlet point (29) of the first washing fluid connecting pipe (27) is upstream of the product feed pump (8) and the outlet point (30) of the second washing fluid connecting pipe (28) is positioned at the product treatment means (10).

17. The machine according to any of the foregoing claims from 10 to 14, **characterised in that** the outlet point (29) of the first connecting pipe (27) is positioned upstream of the product feed pump (8) and the second outlet point (30) of the second connecting pipe (28) is positioned at the dispensing means (11).

18. The machine according to any of the foregoing claims from 1 to 14, **characterised in that** the feed and treatment circuit (4) comprises a tank (3) closed by a lid (41) and with a product stirrer (42) inside and a tap (43) for dispensing the product from the tank.

19. The machine according to claim 18, **characterised in that** the outlet point (29) of the first washing fluid feed pipe (27) is positioned in the tank (3) and the outlet point (30) of the second washing fluid connecting pipe (28) is positioned at the tap (43) for dispensing the product from the tank (3).

20. The machine according to any of the foregoing claims from 1 to 14, **characterised in that** the feed and treatment circuit (4) comprises a tank (46) closed by a lid (48) and equipped on its base with a cup pump (50) comprising a product stirrer (53) and a heat exchange circuit (52) and a tap (54) for dispensing the product from the tank (46) through a siphon (55).

21. The machine according to claim 20, **characterised in that** the outlet point (29) of the first washing fluid feed pipe (27) is positioned in the tank (46) and the cup pump (50) and the outlet point (30) of the second washing fluid connecting pipe (28) is positioned at the tap (54) for dispensing the product from the tank (46) and at the siphon (55).

22. The machine according to any of the foregoing claims from 1 to 21, **characterised in that** the washing device (18) consists of a kit (44) which can be connected to the machine (1) using quick coupling - release means (45).

23. A method for producing and dispensing liquid and semi-liquid consumer food products, **characterised in that** it comprises for washing and sanitising the machines (1) for producing and dispensing liquid and semi-liquid consumer food products, the step of feeding a washing and/or sanitising fluid in a basic product feed and treatment circuit (4).

24. The method according to claim 23, **characterised in that** it comprises the steps of heating the washing and/or sanitising fluid to different temperature levels to obtain washing and/or sanitising fluids respectively in the liquid state or in the steam state.

25. The method according to claim 23, in which the machines comprise a container (3) for a basic product, and the feed and treatment circuit (4) comprises a pump (8) for feeding said product, pump (8) motor means (9), valve means (38) for interrupting feed of the basic product to the pump (8) and product dispensing means (11) at the outfeed end of the feed and treatment circuit (4), the method being **characterised in that** it comprises a first step of interrupting the feed of basic product by activating the valve means (38), a step of feeding the fluid in the liquid state to the feed and treatment circuit (4) with the pump (8) running, a step of feeding the fluid in the liquid state with the pump (8) stopped, a step of feeding the fluid in the steam state.

26. The method according to claim 25, **characterised in that** it involves repeating the washing and sanitising steps any number of times and in a particular and predetermined order.
